Europäisches Patentamt

European Patent Office

Office européen des brevets

(11) Veröffentlichungsnummer : **0 033 761**
**B1**

# (12) EUROPÄISCHE PATENTSCHRIFT

(45) Veröffentlichungstag der Patentschrift :
26.09.84

(21) Anmeldenummer : 80106622.6

(22) Anmeldetag : 29.10.80

(51) Int. Cl.³ : **B 60 K 26/02**

(54) **Gaspedalbewegungsdämpfer.**

(30) Priorität : 08.11.79 DE 7931507 U

(43) Veröffentlichungstag der Anmeldung :
19.08.81 Patentblatt 81/33

(45) Bekanntmachung des Hinweises auf die Patenterteilung : 26.09.84 Patentblatt 84/39

(84) Benannte Vertragsstaaten :
AT BE CH DE FR GB IT LI LU NL SE

(56) Entgegenhaltungen :
DE-C-   362 495
DE-U- 6 607 138
DE-U- 7 604 221
DE-U- 7 931 507
US-A- 1 554 687
US-A- 2 336 447
US-A- 3 918 320

(73) Patentinhaber : **Nienaber, Karl**
**Königstrasse 18**
**D-4724 Wadersloh 2 (Liesborn) (DE)**

(72) Erfinder : **Nienaber, Heinrich**
**Klusenweg 10**
**D-584 Schwerte (DE)**

(74) Vertreter : **Schulze Horn, Hannes, Dr.-Ing.**
**Im Defdahl 51**
**D-4600 Dortmund 1 (DE)**

## Beschreibung

Die Erfindung betrifft einen Gaspedalbewegungsdämpfer zur Dämpfung von Gaspedalbewegungen in Kraftfahrzeugen zum Zwecke der Kraftstoffeinsparung, der als Montageeinheit mit einer Grundplatte zum Aufsatz auf das Bodenblech des Pedalraumes ausgebildet ist und unter dem Gaspedal einen elastischen, kugeligen Hohlkörper mit einer Luftauslaßdüse aufweist.

Es ist bekannt, daß insbesondere bei Otto-Motoren, aber auch bei Diesel-Motoren, ein schnelles und/oder tiefes Durchtreten des Gaspedals zu übermäßig hohem Kraftstoffverbrauch führt. Zur Vermeidung eines zu schnellen oder zu tiefen Durchtretens des Gaspedals sind daher bereits Gaspedalbewegungsdämpfer entwickelt worden. Ein Gaspedalbewegungsdämpfer mit elastischem, kugeligen Hohlkörper ist das aus der US-A-1-1,554,687 bekannte Gerät. Bei diesem Gerät ist nachteilig, daß die notwendige Luftauslaßdüse seitlich angeordnet ist. Hier wird sie bei einem Zusammendrücken des Hohlkörpers blockiert. Des weiteren ist nachteilig, daß das Zusammendrücken des elastischen Hohlkörpers unkontrolliert erfolgt.

Es ist Aufgabe der Erfindung, den bekannten Gaspedalbewegungsdämpfer mit einer kontrollierten Bewegungsdämpfung zu versehen und insbesondere ein Gerät anzugeben, das zur Nachrüstung durch den Autobesitzer geeignet ist.

Die Aufgabe wird dadurch gelöst, daß die Luftauslaßdüse der Grundplatte zugekehrt angeordnet ist und daß am Gaspedal ein kegeliger, kleiner als der Hohlkörper ausgebildeter Verformungskörper, der eine abgerundete Spitze aufweist, mittig über dem Verformungskörper angeordnet ist, der bei Betätigung des Gaspedals in den Hohlkörper eindringt, der in einem Aufnahmering, der im wesentlichen dieselbe Größe wie der Hohlkörper hat, gelagert ist. Durch die erfindungsgemäße Ausbildung des Gaspedalbewegungsdämpfers wird besonders vorteilhaft erreicht, daß der elastische Hohlkörper vollständig zusammengedrückt werden kann. So ist es möglich, in Gefahrensituationen oder bei besonders großer Eile, das Gaspedal trotz der Verwendung des erfindungsgemäßen Bewegungsdämpfers schnell vollständig durchzutreten. Es steht weiterhin der volle Gaspedalweg kontrolliert zur Verfügung. Es ergibt sich eine besonders gute Dämpfung und sanfte Rückfederung, die auch bei voll durchgetretenem Gaspedal nur geringe Fußkräfte erfordert. Die Rückstellkraft nimmt nicht progressiv zu, wie bei einem geschlossenen, elastischen Hohlkörper, sondern verläuft im Gegenteil zunächst linear und später sogar vorteilhaft degressiv, da durch Ineinanderlegen der oberen und unteren Seite des Gummikörpers die Rückstellkraft zum Schluß der Gaspedalbewegung wieder sehr gering wird. Durch den Aufnahmering ist der elastische Hohlkörper seitlich gehalten, ohne daß seine Zusammendrückbarkeit behindert wird.

In Ausgestaltung der Erfindung ist vorgesehen, daß der Aufnahmering für den elastischen Hohlkörper Luftauslaßöffnungen aufweist. Hierdurch wird vorteilhaft erreicht, daß die aus dem elastischen Hohlkörper austretende Luft auch dann ohne weiteres austreten kann, wenn der Haltering einen geschlossenen Boden aufweist oder auf seinem gesamten Umfang mit der Grundplatte verbunden ist. So wirkt das System, « elastischer Hohlkörper — zylinderförmiger Aufnahmering », nicht im ganzen als Luftfeder. Eine progressive Federkennlinie wird so vorteilhaft vermieden.

In anderer Ausgestaltung der Erfindung ist vorgesehen, daß der elastische Hohlkörper die Form einer Halbkugel aufweist. Hierdurch ist es vorteilhaft möglich, die Größe des Federkörpers zu verkleinern. Weiterhin wird sein Inneres zugänglich, so daß hier zusätzliche Funktionsglieder angeordnet werden können.

In weiterer Ausgestaltung der Erfindung ist vorgesehen, daß der Gaspedalbewegungsdämpfer einen Stellungsschalter mit elektrischen Übertragungselementen zu einem Anzeigegerät, vorzugsweise einer Signallampe, aufweist. Auf diese Art und Weise kann dem Fahrer nicht nur über den erhöhten Pedaldruck, sondern auch optisch, mitgeteilt werden, daß er sich im ungünstigen Bereich bewegt. So dient der erfindungsgemäße Gaspedalbewegungsdämpfer auch als vorteilhaftes Anzeigegerät für die Gaspedalstellung.

In einer weiteren Ausgestaltung der Erfindung ist vorgesehen, daß der Stellungsschalter im Inneren des elastischen Hohlkörpers angeordnet ist. So wird vorteilhaft eine besonders kompakte Bauweise erreicht und die Montage erleichtert. Des weiteren ist der Stellungsschalter so besonders gut geschützt.

In weiterer Ausgestaltung der Erfindung ist vorgesehen, daß der Stellungsschalter eine Innenfeder und eine Außenfeder aufweist, die an ihren Spitzen Kontaktplatten aufweisen. Durch die Verwendung von zwei Federn, insbesondere von zwei Schraubenfedern mit großer Steigung und kleiner Drahtstärke ergibt sich ein Schalter, dessen Anordung in dem elastischen Hohlkörper die Federcharakteristik des Gaspedalbewegungsdämpfers nicht verändert. Trotzdem ist, insbesondere bei der Anordnung von Kontaktplatten an den Federspitzen, eine sichere Funktion gewährleistet.

Die Erfindung wird in Zeichnungen in einer bevorzugten Ausführungsform gezeigt, wobei aus den Zeichnungen weitere vorteilhafte Einzelheiten der Erfindung entnehmbar sind.

Die Zeichnungen zeigen im einzelnen :

Figur 1 einen im Pedalraum eines Kraftwagens eingebauten, erfindungsgemäßen Gaspedalbewegungsdämpfer,

Figur 2 einen Schnitt durch einen Bewegungsdämpfer mit kugeligem, elastischen Hohlkörper in Leerlaufstellung,

Figur 3 einen Schnitt durch einen Bewegungsdämpfer mit kugeligem, elastischen Hohlkörper in Vollgasstellung,

Figur 4 einen Schnitt durch einen Bewegungsdämpfer mit halbkugeligem, elastischen Hohlkörper und im Hohlkörper angeordneten Schalter.

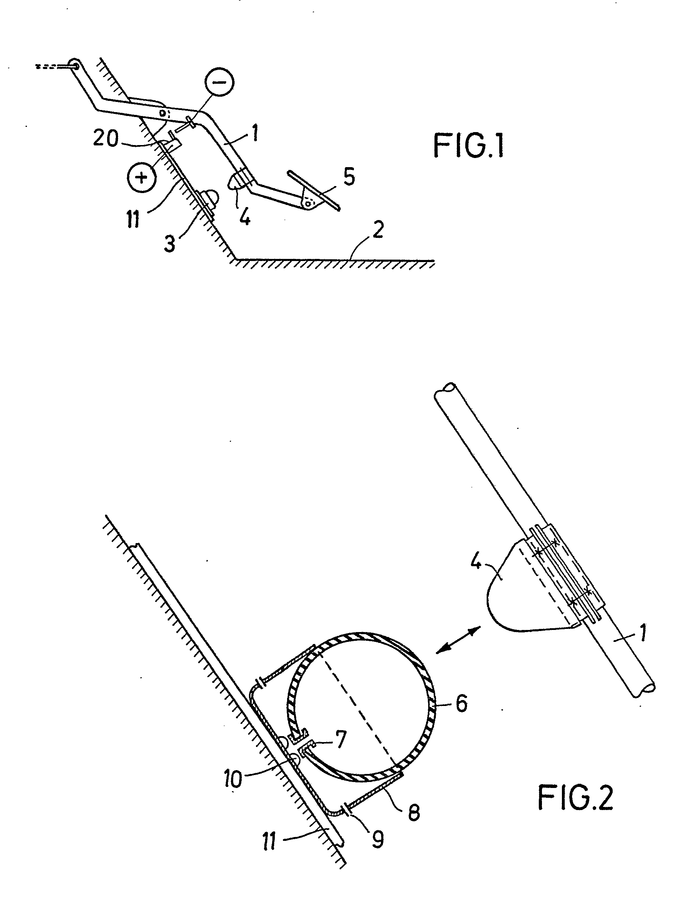

In Fig. 1 bezeichnet 1 das Gaspedal und 2 die Wand des Pedalraumes, auf der der Gaspedalbewegungsdämpfer durch nicht näher gezeigte Befestigungsmittel, wie Blechschrauben, befestigt ist. Am oberen Ende des Gaspedals 1 befindet sich die Trittplatte 5. In ihrer Nähe ist, insbesondere bei der Verwendung eines kugeligen, elastischen Hohlkörpers 6 als Bewegungsdämpfer, ein in gezeigter Weise vorzugsweise kegeliger Verformungskörper 4 angeordnet, der in den kugeligen, elastischen Hohlkörper 6 eindringt und diesen erfindungsgemäß verformt. Die Spitze des kegeligen Verformungskörpers 4 ist abgerundet.

Der elastische Hohlkörper ist vorzugsweise aus Gummi, insbesondere wenn er kugelig ausgebildet ist. bei der Verwendung eines anderen, etwa an der Oberseite glattflächigen, elastischen Bewegungsdämpfers kann der Verformungskörper 4 entfallen, ebenso bei verringertem Ansprechweg.

In der etwa den Maßstab 1 : 1 aufweisenden Fig. 2 bezeichnet 6 den elastischen Hohlkörper und 7 die Düse für den Luftaustritt. Der kugelige Hohlkörper 6 ist fest in den zylinderförmigen Teil 8 eingepreßt, der vorzugseise als tiefgezogener Napf ausgebildet ist. Der zylinderförmige Teil 8 weist Luftaustrittslöcher 9 auf. Um zu verhindern, daß die Düse 7 durch den Boden des Napfes 8 verschlossen wird, sind mindestens zwei Abstandshalter 10 vorhanden, die für einen freien Austritt der Luft aus dem elastischen Hohlkörper 6 in den Napf 8 sorgen. Von hier entweicht die Luft durch die Öffnungen 9 nach außen.

Zwischen dem Gaspedal 1 und der Grundplatte 11 ist ein Schalter 20 angeordnet, von dem Leitungen zu einem optisch oder eventuell auch akustisch arbeitenden Anzeigegerät verlaufen. Der Schalter 20 kann als einfacher Ein-Aus-Schalter, aber auch als Mehrkontakt-Schalter ausgebildet sein, wenn z. B durch verschiedenfarbige Signallämpchen o. ä. verschiedene Lagen des Gaspedals z. B. 3/4 Gas, 9/10 Gas, Vollgas angezeigt werden sollen. In diesem Fall werden also vorteilhaft zusätzlich zur Bewegungsdämpfung die verschiedenen Fahrtstufen, wie kraftstoffsparendes Fahren, zügiges Schnellfahren und Vollgasfahren angezeigt.

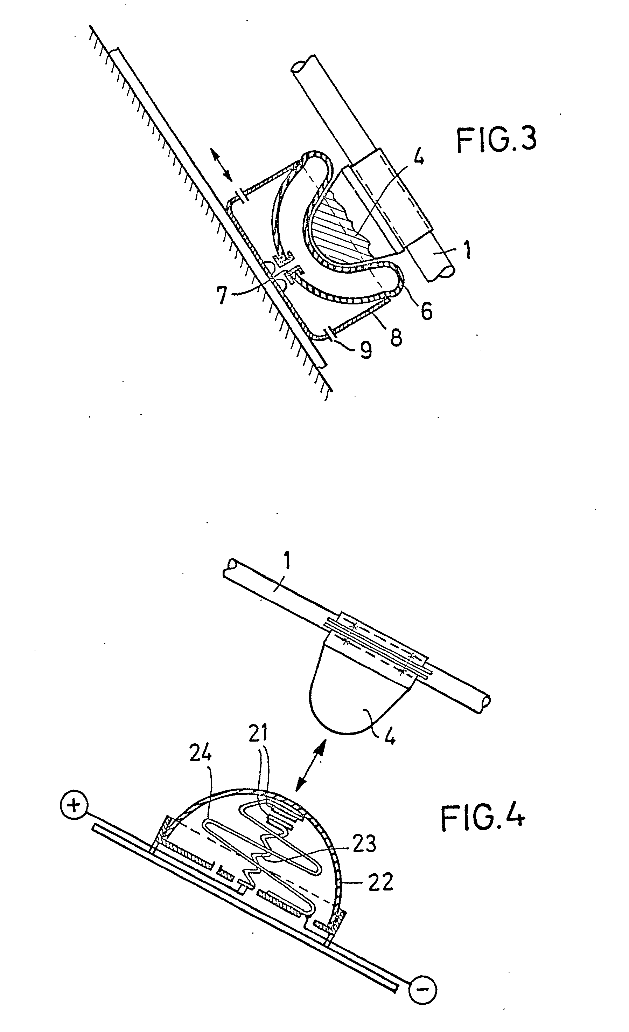

Wie aus Fig. 3 ersichtlich ist, stülpt sich vorteilhaft bei durchgetretenem Gaspedal das Oberteil des elastischen Hohlkörpers 6 in das Unterteil. In dieser Stellung sind die Rückstellkräfte des elastischen Hohlkörpers 6, insbesondere wenn er aus Gummi ist, nur sehr gering, so daß auch bei Vollgas, das beim Überholen auf Landstraßen oder um eine Kreuzung schnell zu räumen, zuweilen notwendig ist, der Pedaldruck nicht zu weit ansteigt.

Fig. 4 zeigt eine besonders vorteilhafte Ausführung des erfindungsgemäßen Gaspedalbewegungsdämpfers mit einem halbkugelförmigen Hohlkörper 22 und im Hohlkörper 22 angeordneten Schalter. Der Schalter besteht aus der inneren Schraubenfeder 23 und der diese konzentrisch umgebenden Schraubenfeder 24 sowie den Kontaktplatten 21. Die beiden Schraubenfedern (23, 24) sind besonders weich ausgebildet und behindern das Eindrücken des Hohlkörpers 22 nicht. So ergibt sich eine besonders kompakte und einfach zu montierende Ausführung des erfindungsgemäßen Gaspedalbewegungsdämpfers.

Die Erfindung ist nicht auf die gezeigten Beispiele beschränkt. Ohne den Rahmen der Erfindung zu verlassen kann der Gaspedalbewegungsdämpfer z. B. ebenso wie im Pedalraum auch an der Außenseite der Spritzwand angeordnet sein.

Es ist weiterhin möglich, die Schalter, die abweichend von der Darstellung auch an beliebigen Stellen am Gaspedal oder Gasgestänge angeordnet werden können, als stufenlose Gaspedalstellungsanzeiger auszubilden, z. B. indem sie als Induktionsspulen ausgebildet werden. Dann ist es möglich, im hauptsächlich interessierenden Bereich mit hohem Bezinverbrauch, die Gaspedalstellung exakt anzuzeigen und gleichzeitig zu dämpfen.

## Ansprüche

1. Gaspedalbewegungsdämpfer zur Dämpfung von Gaspedalbewegungen in Kraftfahrzeugen zum Zwecke der Kraftstoffeinsparung, der als Montageeinheit mit einer Grundplatte (11) zum Aufsatz auf das Bodenblech des Pedalraumes ausgebildet ist und unter dem Gaspedal einen elastischen, kugeligen Höhlkörper (6) mit einer Luftauslaßdüse (7) aufweist, dadurch gekennzeichnet, daß die Luftauslaßdüse (7) der Grundplatte (11) zugekehrt angeordnet ist und daß am Gaspedal (1) ein kegeliger, kleiner als der Hohlkörper ausgebildeter Verformungskörper (4), der eine abgerundete Spitze aufweist, mittig über dem Verformungskörper (4) angeordnet ist, der bei Betätigung des Gaspedals (1) in den Hohlkörper (6) eindringt, der in einem Aufnahmering (8), der im wesentlichen dieselbe Größe wie der Hohlkörper (6) hat, gelagert ist.

2. Gaspedalbewegungsdämpfer nach Anspruch 1, dadurch gekennzeichnet, daß der Aufnahmering (8) für den elastischen Hohlkörper Luftauslaßöffnungen (9) aufweist.

3. Gaspedalbewegungsdämpfer nach Anspruch 1 oder 2, dadurch gekennzeichnet, daß der elastische Hohlkörper (6) die Form einer Halbkugel aufweist.

4. Gaspedalbewegungsdämpfer nach Anspruch 1, 2 oder 3, dadurch gekennzeichnet, daß er einen Stellungsschalter (19, 20) mit elektrischen Übertragungselementen zu einem Anzeigegerät, vorzugsweise einer Signallampe, aufweist.

5. Gaspedalbewegungsdämpfer nach An-

spruch 4, dadurch gekennzeichnet, daß der Stellungsschalter (19, 20) im Inneren des elastischen Hohlkörpers (6, 22) angeordnet ist.

6. Gaspedalbewegungsdämpfer nach Anspruch 4 oder 5, dadurch gekennzeichnet, daß der Stellungsschalter eine Innenfeder (23) und eine Außenfeder (24) aufweist, die an ihren Spitzen Kontaktplatten (21) aufweisen.

**Claims**

1. An accelerator pedal movement damping device for damping accelerator pedal movements in motor vehicles in order to save fuel, which is designed as an assembly unit having a base plate (11) to be placed on the floor panel of the pedal area and exhibits under the accelerator pedal an elastic, spherical hollow body (6) with an air outlet nozzle (7), characterized in that the air outlet nozzle (7) is arranged facing the base plate (11) and that a conical resilient body (4), which is smaller than the hollow body and has a rounded tip, is arranged at the gas pedal above the middle of the hollow body (6) and, when the accelerator pedal (1) is operated, penetrates the hollow body (6) which is mounted in a receiving ring (8) of essentially the same size as the hollow body (6).

2. An accelerator pedal movement damping device as in claim 1, characterized in that the receiving ring (8) exhibits air outlet openings (9) for the elastic hollow body.

3. An accelerator pedal movement damping device as in claim 1 or 2, characterized in that the elastic hollow body (6) has a semispherical shape.

4. An accelerator pedal movement damping device as in claim 1, 2 or 3, characterized in that it exhibits a position switch (19, 20) with electrical transmission elements supplying a display device, preferably a signal lamp.

5. An accelerator pedal movement damping device as in claim 4, characterized in that the position switch (19, 20) is arranged in the interior of the elastic hollow body (6, 22).

6. An accelerator pedal movement damping device as in claim 4 or 5, characterized in that the position switch exhibits an inner spring (23) and an outer spring (24) having contact plates (21) at their tips.

**Revendications**

1. Dispositif pour amortir le mouvement de l'accélérateur d'un véhicule automobile en vue d'économiser du carburant, formant un ensemble de montage comportant une plaque de base (11) à monter sur la tôle inférieure de l'espace au-dessous de l'accélérateur et un corps creux, élastique, sphérique (6), muni d'une buse de sortie (7) pour de l'air et étant disposée au-dessous de l'accélérateur, caractérisé par le fait que la buse de sortie (7) est disposée en face de la plaque de base (11) et que, un corps déformateur conique (4) plus petit que le corps creux (4) et possédant un bout arrondi est disposé au centre au-dessus du corps creux (6), qui, lors de l'actionnement de l'accélérateur (1) pénètre dans le corps creux (6), le dernier se reposant dans une bague de retenue (8) ayant essentiellement la même ampleur que le corps creux (6).

2. Dispositif selon la revendication 1, caractérisé par le fait que la bague de retenue (8) pour le corps creux comporte des orifices de sortie de l'air (9).

3. Dispositif selon la revendication 1 ou 2, caractérisé par le fait que le corps creux (6) a la forme d'un hémisphère.

4. Dispositif selon la revendication 1, 2 ou 3, caractérisé par le fait qu'il comporte un interrupteur de position (19, 20), possédant des éléments de transmission électrique pour un dispositif d'affichage, de préférence une lampe de signalisation.

5. Dispositif selon la revendication 4, caractérisé par le fait que l'interrupteur de position (19, 20) est disposé à l'intérieur du corps creux élastique (6, 22).

6. Dispositif selon la revendication 4 ou 5, caractérisé par le fait que l'interrupteur de position comporte un ressort intérieur (23) et un ressort extérieur (24), les deux étant munis à leurs pointes des plaques de contact (21).

FIG.1

FIG.2

FIG.3

FIG.4